(19) Europäisches Patentamt
European Patent Office
Office européen des brevets

(11) **EP 4 220 246 B1**

(12) **FASCICULE DE BREVET EUROPEEN**

(45) Date de publication et mention
de la délivrance du brevet:
**07.08.2024 Bulletin 2024/32**

(21) Numéro de dépôt: **22216678.7**

(22) Date de dépôt: **26.12.2022**

(51) Classification Internationale des Brevets (IPC):
**G02B 5/00** *(2006.01)* **G02B 23/02** *(2006.01)*
**G02B 27/00** *(2006.01)*

(52) Classification Coopérative des Brevets (CPC):
**G02B 5/003; G02B 5/005; G02B 23/02;
G02B 27/0018**

(54) **INSTRUMENT D'IMAGERIE**

**BILDGEBUNGSINSTRUMENT**

**IMAGING INSTRUMENT**

(84) Etats contractants désignés:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priorité: **26.01.2022 FR 2200652**

(43) Date de publication de la demande:
**02.08.2023 Bulletin 2023/31**

(73) Titulaire: **Airbus Defence and Space SAS
31402 Toulouse Cedex 4 (FR)**

(72) Inventeur: **PASTERNAK, Frédéric
31402 TOULOUSE CEDEX 4 (FR)**

(74) Mandataire: **Plasseraud IP
66, rue de la Chaussée d'Antin
75440 Paris Cedex 09 (FR)**

(56) Documents cités:
**EP-A1- 0 593 327      EP-A2- 0 785 447
WO-A1-2011/138541**

**Description**

**Domaine technique**

La présente description concerne un instrument d'imagerie conçu pour supprimer certains rayons lumineux parasites susceptibles de parvenir à un capteur d'images qui est utilisé dans l'instrument.

**Technique antérieure**

Un instrument d'imagerie comprend de façon générale une optique imageante et un capteur d'images qui est disposé dans un plan d'image. Le capteur d'images saisit alors à chaque cycle de lecture, une image qui est formée par des rayons lumineux transmis par l'optique imageante. Pour chaque point d'image, ces rayons lumineux qui contribuent à la formation de l'image sont limités par une pupille de l'instrument. Cette pupille limite, dans un plan longitudinal qui contient l'axe optique de l'instrument au niveau du capteur d'images, le secteur angulaire des rayons lumineux qui parviennent au capteur d'images. Elle peut être déterminée de diverses manières, par exemple par un bord périphérique d'un des composants de l'optique imageante, ou par un diaphragme intermédiaire qui est ajouté dans un plan pupillaire de l'instrument.

Certains instruments d'imagerie comprennent en outre un composant optique supplémentaire, qui est situé entre l'optique imageante et le capteur d'images, et qui est destiné à être traversé par les rayons lumineux qui forment l'image saisie par le capteur. Un tel composant optique peut être par exemple un filtre spectral, ou un ensemble de filtres spectraux qui sont juxtaposés et ont chacun une forme de bande.

Mais les faces d'un tel composant optique supplémentaire, de même que la surface photosensible du capteur d'images, ont chacune un pouvoir résiduel de réflexion, même si ces faces et/ou la surface photosensible sont munies de traitements antireflets. Un rayon lumineux qui provient de l'optique imageante pour converger en un point d'image sur la surface photosensible du capteur d'images est alors partiellement réfléchi par celle-ci, puis de nouveau partiellement réfléchi par l'une ou l'autre des faces du composant optique supplémentaire, de sorte qu'une partie de ce rayon peut revenir sur le capteur d'images, à un endroit qui est en général différent du point d'image à son premier impact sur la surface photosensible. Les parties du rayon lumineux qui ont ainsi été réfléchies sont des rayons parasites. Ces rayons parasites provoquent une réduction du contraste et de la précision de l'image qui est saisie à chaque cycle de lecture du capteur d'images.

Or le pouvoir résiduel de réflexion de chaque face du composant optique supplémentaire n'est pas toujours faible, de sorte que l'intensité lumineuse qui est associée aux rayons parasites peut être significative, et la dégradation de l'image saisie qui en résulte peut être gênante. Tel est le cas par exemple lorsque ce composant optique supplémentaire est un filtre spectral, avec un filtre interférentiel qui est porté par l'une des faces du composant. Même si sa valeur de transmission au centre de la fenêtre spectrale de transmission du filtre interférentiel est très élevée, avec une valeur de réflexion correspondante qui est très faible, le filtre interférentiel confère à la face du composant optique sur laquelle il se trouve, une valeur de réflexion qui est importante aux limites de la fenêtre spectrale de transmission. Par conséquent, un tel composant optique supplémentaire à filtre interférentiel peut générer des rayons parasites dans une mesure qui est gênante, particulièrement aux longueurs d'onde qui correspondent aux limites de la fenêtre spectrale de filtrage. En effet, ces longueurs d'onde de limites du filtre sont en général à l'intérieur de l'intervalle spectral de sensibilité du capteur d'images, de sorte que les rayons parasites qui sont générés par des réflexions sur la face du filtre dégradent l'image qui est saisie. Les documents EP0593327, EP0785447, WO2011138541 divulguent des télescopes connus de l'état de la technique antérieure.

**Problème technique**

A partir de cette situation, un but de la présente invention est de réduire la quantité des rayons parasites qui parviennent au capteur d'images, dans un instrument d'imagerie du type qui vient d'être décrit.

Plus particulièrement, l'invention a pour but de supprimer certains au moins des rayons parasites qui subissent au moins une réflexion sur l'une des faces du composant optique supplémentaire.

Encore plus particulièrement, l'invention a pour but de supprimer, parmi tous les rayons lumineux qui parviennent au capteur d'images, des rayons parasites qui sont générés par une réflexion partielle de rayons lumineux utiles sur la surface photosensible du capteur d'images, suivie par une autre réflexion sur l'une des faces de sortie et d'entrée du composant optique supplémentaire. Par rayons lumineux utiles sont désignés ceux des rayons lumineux qui contribuent à l'image formée par l'optique imageante.

**Résumé de l'invention**

Pour atteindre l'un au moins de ces buts, un premier aspect de l'invention propose un instrument d'imagerie qui comprend :

- une optique imageante adaptée pour former une image, appelée image nominale, dans un plan d'image à partir de rayons lumineux qui sont transmis par cette optique imageante ;
- un capteur d'images qui possède une surface photosensible, et qui est disposé de sorte que cette surface photosensible soit superposée au plan d'image ; et
- un composant optique qui est situé fixement sur un trajet des rayons lumineux entre l'optique imageante et le capteur d'images, ce composant optique comprenant une portion d'un matériau réfringent et au moins partiellement transparent pour les rayons lumineux, cette portion ayant deux faces planes et étant traversée par les rayons lumineux entre ses deux faces lors d'une utilisation de l'instrument.

Une partie utile de la surface photosensible est limitée par deux points opposés, appelés bords de champ, dans un plan longitudinal qui contient un axe optique de l'instrument.
L'invention trouve utilité lorsque la surface photosensible du capteur d'images et l'une au moins des faces du composant optique possèdent des pouvoirs de réflexion respectifs, tels que les rayons lumineux qui forment l'image nominale sont partiellement réfléchis par la surface photosensible puis par la face du composant optique, et reviennent en direction de la surface photosensible.
Selon une caractéristique l'invention, l'instrument comprend en outre :

- un masque, qui est situé fixement sur le trajet des rayons lumineux entre le composant optique et le capteur d'images, et qui possède une ouverture limitée dans le plan longitudinal par deux bords de masque opposés, les rayons lumineux passant à travers cette ouverture lors de l'utilisation de l'instrument.

Un premier des bords de masque et un premier des bords de champ sont situés, à l'intérieur du plan longitudinal, sur un même premier côté latéral de l'axe optique de l'instrument entre le composant optique et le capteur d'images. De même, un second des bords de masque et un second des bords de champ sont situés sur un même second côté latéral de l'axe optique, qui est opposé au premier côté latéral. Le premier bord de masque limite un faisceau lumineux qui est transmis par l'optique d'imagerie et qui converge au premier bord de champ, et le second bord de masque limite un autre faisceau lumineux qui est aussi transmis par l'optique d'imagerie mais qui converge au second bord de champ.
Selon une caractéristique supplémentaire de l'invention, pour l'une au moins des faces du composant optique qui possède un pouvoir de réflexion, un angle d'inclinaison d'une direction qui est perpendiculaire à cette face, par rapport à l'axe optique entre le composant optique et le capteur d'images et à l'intérieur du plan longitudinal, est tel qu'un rayon lumineux, appelé rayon critique, qui est issu du second bord de champ puis réfléchi par la face du composant optique pour effleurer le premier bord de masque, fasse un angle avec l'axe optique au niveau du premier bord de masque, qui est inférieur à un plus petit des angles formés avec cet axe optique par des réflexions sur la surface photosensible du capteur d'images puis sur la face du composant optique de tous les rayons lumineux qui sont transmis par l'optique imageante en direction du capteur d'images.
De cette façon, des rayons parasites qui résulteraient de réflexions ultérieures du rayon critique à l'intérieur de l'instrument sont supprimés. Simultanément, et grâce au fait que le rayon critique est celui qui présente un angle par rapport à l'axe optique qui est le plus grand après réflexion sur la surface photosensible du capteur d'images puis sur la face considérée du composant optique, parmi tous les rayons parasites qui proviennent d'un point de l'image nominale et qui subissent les mêmes réflexions, tous ces rayons parasites sont aussi supprimés. Le contraste de l'image telle que saisie par le capteur d'images est ainsi amélioré.
De préférence, lorsque l'optique imageante possède une pupille qui est effective pour les rayons lumineux qui sont transmis par elle à travers le composant optique en direction du capteur d'images, le rayon critique, après réflexion sur la face du composant optique, peut être orienté angulairement en dehors d'un faisceau tel que résultant de la réflexion sur la surface photosensible puis sur la face du composant optique des rayons lumineux qui sont transmis par l'optique imageante à travers le composant optique, et tels que limités par la pupille de l'optique imageante. En particulier, le premier bord de masque peut être superposé dans le plan longitudinal à une première limite qui est générée par la pupille de l'optique imageante et qui est effective pour les rayons lumineux qui parviennent au premier bord de champ. Alternativement ou en combinaison, le second bord de masque peut de même être superposé dans le plan longitudinal à une seconde limite qui est aussi générée par la pupille de l'optique imageante mais qui est effective pour les rayons lumineux qui parviennent au second bord de champ. Ainsi, l'optique imageante peut être optimisée quant à son encombrement et son poids par rapport au masque qui est ajouté selon l'invention.
La face du composant optique qui est inclinée pour que le rayon critique soit moins oblique par rapport à l'axe optique que tous les rayons lumineux qui sont transmis par l'optique imageante, après leur réflexion sur la face du composant optique, peut être une face de sortie de ce composant optique, qui est tournée vers le capteur d'images.

Or, le composant optique peut posséder une face de sortie qui est tournée vers le capteur d'images, mais aussi une face d'entrée qui est tournée vers l'optique imageante. Alors, la face du composant optique qui est inclinée pour que le rayon critique soit moins oblique par rapport à l'axe optique que tous les rayons lumineux qui sont transmis par l'optique imageante, après leur réflexion sur la face du composant optique, peut être la face d'entrée de ce composant optique. Dans ce cas, le rayon critique et les rayons lumineux sont soumis à une réfraction chaque fois que chacun d'eux traverse la face de sortie du composant optique.

Encore lorsque le composant optique possède une face de sortie tournée vers le capteur d'images et une face d'entrée tournée vers l'optique imageante, et si ces deux faces d'entrée et de sortie possèdent des pouvoirs de réflexion respectifs, alors des rayons parasites qui sont issus de la réflexion sur la surface photosensible du capteur d'images suivie d'une réflexion sur l'une ou l'autre de la face de sortie et de la face d'entrée du composant optique peuvent tous être supprimés. Pour cela, les deux caractéristiques suivantes peuvent avantageusement être satisfaites :

- la face de sortie est inclinée par rapport au plan perpendiculaire à l'axe optique entre le composant optique et le capteur d'images, dans un sens tel qu'une direction perpendiculaire à cette face de sortie s'éloigne du premier bord de masque en direction du second bord de masque, et selon une valeur d'angle telle qu'un premier rayon critique qui est issu du second bord de champ, puis est réfléchi par la face de sortie pour effleurer le premier bord de masque, fasse un premier angle par rapport à l'axe optique au niveau du premier bord de masque, qui est inférieur au plus petit des angles formés avec l'axe optique par les réflexions sur la surface photosensible puis sur la face de sortie de tous les rayons lumineux qui sont transmis par l'optique imageante en direction capteur d'images ; et
- la face d'entrée est inclinée par rapport à la face de sortie de sorte qu'un second rayon critique qui est issu du premier bord de champ traverse la face de sortie, puis est réfléchi par la face d'entrée, retraverse la face de sortie pour effleurer le second bord de masque, fasse un second angle par rapport à l'axe optique au niveau du second bord de masque, qui est inférieur au plus petit des angles formés avec l'axe optique par des réflexions sur la surface photosensible puis sur la face d'entrée de tous les rayons lumineux qui sont transmis par l'optique imageante en direction du capteur d'images. Dans ce cas, le second rayon critique et les rayons lumineux sont soumis à une réfraction chaque fois que chacun d'eux traverse la face de sortie du composant optique.

Alors, la direction perpendiculaire à la face de sortie du composant optique forme un angle qui est non-nul avec l'axe optique tel que cet axe optique est orienté entre le composant optique et le capteur d'images.

De plus, la face d'entrée et la face de sortie du composant optique forment entre elles un angle qui est non-nul.

Dans des cas particuliers de réalisation de l'invention, la partie utile de la surface photosensible du capteur d'images peut être limitée à un seul photodétecteur, ou pixel, à l'intérieur du plan longitudinal. Alors, l'invention peut être reproduite avec les caractéristiques suivantes :

- la face de sortie du composant optique est perpendiculaire à un premier rayon lumineux qui parviendrait au photodétecteur, tel que ce premier rayon lumineux serait orienté au niveau de la face de sortie ;
- la face d'entrée du composant optique est perpendiculaire à un second rayon lumineux qui parviendrait au photodétecteur après avoir traversé le composant optique, tel que ce second rayon lumineux serait orienté au niveau de la face d'entrée ; et
- le masque est adapté pour limiter le faisceau des rayons lumineux qui parviennent au photodétecteur en ayant été transmis par l'optique imageante, à un secteur angulaire qui est compris entre les premier et second rayons lumineux à l'intérieur du plan longitudinal.

De façon générale pour l'invention, le composant optique peut être un filtre spectral, ou un ensemble de filtres spectraux qui sont juxtaposés chacun en forme de bande, chaque filtre spectral étant efficace pour transmettre sélectivement des rayons lumineux qui sont contenus dans une fenêtre spectrale de ce filtre. En particulier, le filtre spectral ou chaque filtre spectral peut être du type filtre par absorption, filtre à couches, filtre à zones, etc.

Encore de façon générale pour l'invention, la face ou l'une des faces du composant optique qui possède un pouvoir de réflexion peut comporter plusieurs facettes élémentaires en formes de bandes qui sont juxtaposées selon une direction de juxtaposition perpendiculaire à une direction longitudinale commune de toutes les facettes élémentaires. En outre, des plans qui contiennent un-à-un les facettes élémentaires, peuvent être tous parallèles et décalés entre eux. Dans ce cas, des rayons lumineux transmis par l'optique imageante qui traversent des facettes élémentaires différentes peuvent converger vers des parties disjointes de la surface photosensible du capteur d'images. Alors, une ouverture du masque peut être dédiée à chaque facette élémentaire séparément des autres facettes élémentaires, de façon à reproduire les caractéristiques de l'invention pour toutes les facettes élémentaires. En outre, l'instrument peut être combiné avec un système de balayage adapté pour déplacer l'image nominale sur la surface photosensible du capteur d'images selon une direction de balayage qui possède une composante parallèle à la direction de juxtaposition des facettes élémentaires. Par exemple, le composant optique peut comporter N facettes élémentaires qui sont juxtaposées, et toutes inclinées selon un même angle par rapport à l'axe optique dans le plan longitudinal, N étant un nombre entier supérieur ou égal à deux et inférieur ou égal à seize. Pour certaines applications de l'invention, chaque facette élémentaire du composant optique peut être associée à un filtre spectral respectif, de sorte qu'une fenêtre spectrale de transmission qui est associée à l'une des facettes élémentaires soit différente de la fenêtre spectrale de transmission qui est associée à chaque autre facette élémentaire.

Enfin, de façon générale pour l'invention, l'optique imageante peut être d'un type quelconque. En particulier, ce peut être un télescope.

En outre, un second aspect de l'invention propose un procédé d'imagerie qui utilise un instrument d'imagerie tel que décrit ci-dessus.

Lorsque le composant optique comporte plusieurs facettes élémentaires qui sont associées à des filtres spectraux dont les fenêtres spectrales de transmission sont différentes, le procédé peut être de type procédé d'imagerie multispectrale. Un tel instrument d'imagerie peut notamment être utilisé à bord d'un satellite qui est en orbite autour de la Terre. Dans ce cas, il est particulièrement adapté que l'optique imageante soit un télescope.

**Brève description des figures**

Les caractéristiques et avantages de la présente invention apparaîtront plus clairement dans la description détaillée ci-après d'exemples de réalisation non-limitatifs, en référence aux figures annexées parmi lesquelles :

[Fig. 1] est un schéma en coupe dans un plan longitudinal d'un instrument d'imagerie auquel l'invention peut être appliquée ;

[Fig. 2a] montre une réalisation de l'invention qui est adaptée à un cas où le capteur d'images ne comporte qu'une seule ligne de photodétecteurs ;

[Fig. 2b] montre une efficacité de la réalisation de l'invention de [Fig. 2a] pour des premiers rayons parasites qui sont réfléchis sur un capteur d'images puis sur une face de sortie d'un composant optique situé devant le capteur d'images ;

[Fig. 2c] correspond à [Fig. 2b] pour des deuxièmes rayons parasites qui sont réfléchis sur le capteur d'images puis sur une face d'entrée du composant optique ;

[Fig. 2d] correspond à [Fig. 2b] pour des troisièmes rayons parasites qui sont réfléchis sur le capteur d'images puis à l'intérieur du composant optique ;

[Fig. 3a] montre un premier rayon critique qui est réfléchi sur la face de sortie du composant optique, dans un cas où le capteur d'images comporte plusieurs lignes voisines de photodétecteurs ;

[Fig. 3b] est un schéma optique qui illustre un critère angulaire de l'invention, pour supprimer des rayons parasites qui sont réfléchis sur la face de sortie du composant optique ;

[Fig. 3c] correspond à [Fig. 3a] pour un second rayon critique qui est réfléchi sur la face d'entrée du composant optique ; et

[Fig. 4] montre un perfectionnement de l'invention, pour lequel des portions d'image sont saisies en parallèle dans plusieurs bandes spectrales.

**Description détaillée de l'invention**

Pour raison de clarté, les dimensions des éléments qui sont représentés dans ces figures ne correspondent ni à des dimensions réelles, ni à des rapports de dimensions réels. En outre, certains de ces éléments ne sont représentés que symboliquement, et des références identiques qui sont indiquées dans des figures différentes désignent des éléments identiques ou qui ont des fonctions identiques.

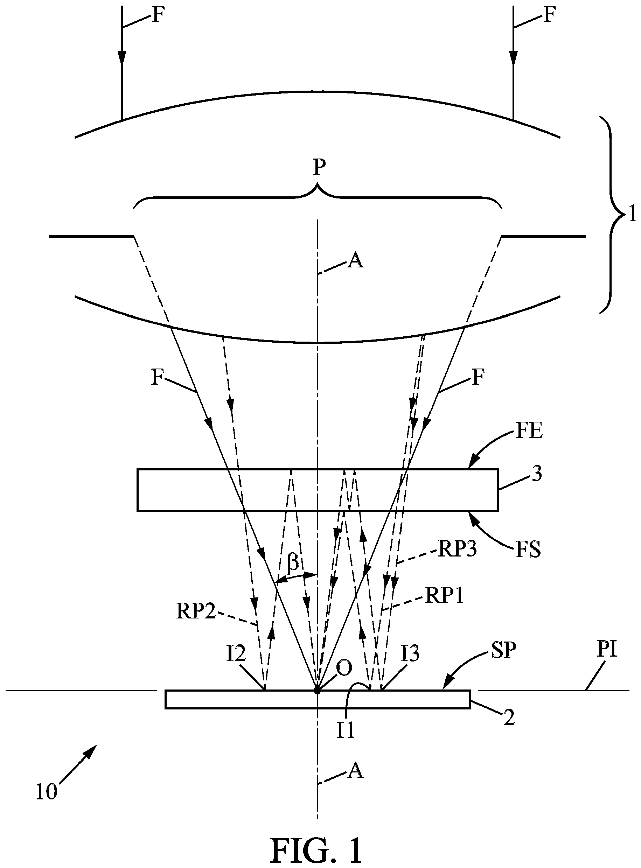

Conformément à [Fig. 1], un instrument d'imagerie qui est désigné globalement par la référence 10 comprend une optique imageante 1 et un capteur d'images 2. L'optique imageante 1 forme une image d'une scène dans un plan d'image PI, qui est perpendiculaire à un axe optique A-A de l'instrument 10. Ainsi, un faisceau de rayons lumineux F qui est issu d'un point de la scène converge en un point d'image dans le plan d'image PI. Le faisceau F qui est représenté correspond à un point de scène qui est situé à grande distance sur une ligne de visée de l'instrument 10, de sorte que le point d'image associé est situé en un centre O du plan d'image PI. L'optique imageante 1 peut être d'un type quelconque, par exemple un télescope à deux ou trois miroirs. De façon connue, le faisceau F est limité transversalement par une pupille P, qui peut être déterminée par l'un des composants de l'optique imageante 1, par exemple le miroir primaire dans le cas d'un télescope, ou par un diaphragme qui est placé dans un plan pupillaire. Le demi-angle d'ouverture du faisceau F à la sortie de l'optique imageante 1, noté $\beta$, est alors égal à Arctan(B/L), où B est le rayon de la pupille de sortie, L est la longueur focale de l'optique imageante 1, et Arctan() désigne la réciproque de la fonction tangente. L'image qui est ainsi formée par l'optique imageante 1 dans le plan d'image PI est appelée image nominale.

Le capteur d'images 2 peut être d'un type quelconque, par exemple un capteur de technologie CMOS. Il comprend au moins une ligne de photodétecteurs, ou plusieurs lignes formant une matrice de photodétecteurs, à l'intérieur d'une surface photosensible du capteur d'images qui est notée SP. Le capteur d'images 2 est disposé de sorte que sa surface photosensible SP soit superposée au plan d'image PI.

Le plan de [Fig. 1] contient l'axe optique A-A de l'instrument d'imagerie 10. Un tel plan a été appelé plan longitudinal dans la partie générale de la présente description. Le plan longitudinal qui est utilisé dans la suite pour décrire l'invention peut être choisi pour être perpendiculaire à une direction des lignes de photodétecteurs du capteur d'images 2, ou bien à une direction de colonnes de sa matrice des photodétecteurs.

Un composant optique supplémentaire qui est au moins partiellement transparent pour les rayons lumineux qui sont transmis par l'optique imageante 1, est disposé sur le trajet de ces rayons lumineux entre cette optique imageante 1 et le capteur d'images 2. Ce composant optique supplémentaire est désigné par la référence 3. Ce peut être un filtre spectral, qui est destiné à limiter l'image qui est saisie par le capteur d'images 2 à une fenêtre spectrale déterminée. Ce filtre spectral peut être notamment du type filtre interférentiel. Le composant optique 3 comprend une portion d'un matériau réfringent homogène, qui possède une valeur d'indice de réfraction n, et qui est limitée par une face d'entrée FE et une face de sortie FS. Ces faces d'entrée FE et de sortie FS sont supposées planes dans une première partie de la présente description, la face d'entrée FE étant tournée vers l'optique imageante 1, et la face de sortie FS étant tournée vers le capteur d'images 2.

La surface photosensible SP du capteur d'images 2, ainsi que les faces d'entrée FE et de sortie FS du composant optique 3, peuvent chacune avoir un pouvoir résiduel de réflexion qui est non-nul et effectif pour les rayons lumineux transmis par l'optique imageante 1. Ces pouvoirs de réflexion peuvent être non-désirés par rapport au fonctionnement optique de l'instrument 10. Il en résulte que des rayons lumineux qui participent à l'image saisie par le capteur d'images 2 peuvent subir une première réflexion partielle sur la surface photosensible SP du capteur d'images 2, puis sur l'une ou l'autre des deux faces FE et FS du composant optique 3, et revenir vers le capteur d'images 2. Les parties de rayons lumineux qui sont ainsi réfléchies participent à une lumière parasite qui réduit le contraste de l'image qui est saisie par le capteur d'images 2. La référence RP1 désigne un tel rayon parasite qui est réfléchi par la surface photosensible SP du capteur d'images 2, au point 11, puis réfléchi par la face de sortie FS du composant optique 3. De façon similaire, la référence RP2 désigne un autre rayon parasite qui est réfléchi par la surface photosensible SP du capteur d'images 2, au point 12, puis par la face d'entrée FE du composant optique 3. Encore un autre rayon parasite, qui est désigné par la référence RP3, résulte de la réflexion partielle d'un rayon lumineux transmis par l'optique imageante 1 en direction du capteur d'images 2, d'abord sur la surface photosensible SP du capteur d'images 2 au point I3, puis sur la face d'entrée FE du composant optique 3 à l'intérieur de ce composant, puis sur sa face de sortie FS, et de nouveau sur sa face d'entrée FE pour se propager ensuite jusqu'au capteur d'images 2. Par souci de clarté, [Fig. 1] ne montre pas les variations d'inclinaison des rayons lumineux à l'intérieur du composant optique 3, qui sont provoquées par la réfraction, mais de telles variations d'inclinaison sont présentes et seront prises en compte dans la suite lorsque nécessaire.

L'invention a pour but de supprimer au moins l'un des rayons parasites RP1, RP2 et RP3.

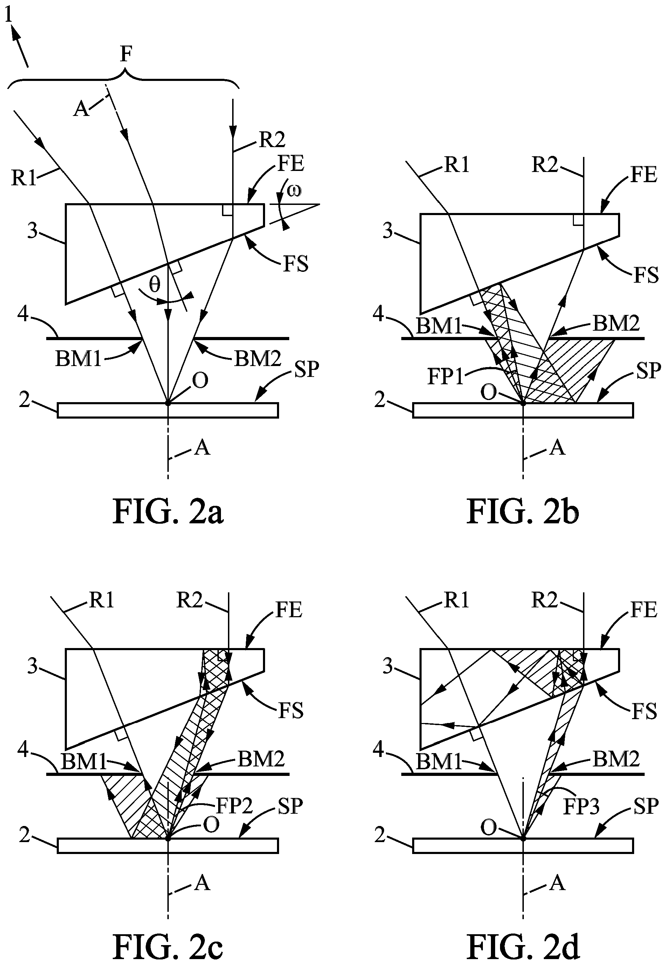

Elle est d'abord décrite en référence à [Fig. 2a]-[Fig. 2d] dans le cas où le capteur d'images 2 ne comporte qu'une seule ligne de photodétecteurs. Alors le plan longitudinal est pris perpendiculaire à cette ligne de photodétecteurs. L'intersection de la ligne de photodétecteurs avec le plan longitudinal peut alors être assimilée à un point unique, qui correspond au point O. Pour une telle réalisation de l'invention, n'importe quel rayon parasite qui serait réfléchi par la surface photosensible SP puis par l'une ou l'autre de la face de sortie FS et de la face d'entrée FE, et qui reviendrait sur la surface photosensible SP au point O, est supprimé si le faisceau des rayons lumineux qui converge au point O pour former l'image nominale est limité à l'intérieur du plan longitudinal entre un premier rayon lumineux R1 qui provient de l'optique imageante 1 en traversant la face de sortie FS du composant optique 3 perpendiculairement à cette face de sortie FS, et un second rayon lumineux R2 qui provient de même de l'optique imageante 1 mais en traversant la face d'entrée FE du composant optique 3 perpendiculairement à cette face d'entrée FE. Pour cela, les faces d'entrée FE et de sortie FS du composant optique 3, toutes deux planes, forment entre elles un angle $\omega$ non-nul dans le plan longitudinal. En outre, la face de sortie FS du composant optique 3 est inclinée d'un angle non-nul $\theta$ dans le plan longitudinal, par rapport à une direction perpendiculaire à l'axe optique A-A à l'intérieur de ce plan longitudinal. La traversée de la face d'entrée FE du composant optique 3 par le rayon lumineux R1, et la traversée de la face de sortie FS du composant optique 3 par le rayon lumineux R2, sont régies par la réfraction. Un masque 4 est alors ajouté selon l'invention, entre le composant optique 3 et le capteur d'images 2, pour limiter le faisceau lumineux qui converge au point O à des rayons lumineux qui sont intermédiaires angulairement entre les rayons lumineux R1 et R2. Les rayons lumineux R1 et R2 correspondent respectivement aux premier et second rayons lumineux tels qu'introduits dans la partie générale de la présente description, pour le cas où la surface photosensible SP est restreinte à un seul photodétecteur dans le plan longitudinal. Les bords de l'ouverture du masque 4 dans le plan longitudinal, notés BM1 et BM2, correspondent respectivement aux limites du faisceau lumineux F que constituent les rayons lumineux R1 et R2. Le masque 4 est de préférence plan et perpendiculaire à l'axe optique A-A tel que cet axe est orienté entre le composant optique 3 et le capteur d'images 2. Le masque 4 qui est ainsi introduit par l'invention peut constituer une pupille de l'instrument 10. Dans des formes optimisées de réalisation de l'invention, le faisceau lumineux qui provient de l'optique imageante 1 pour former l'image nominale, tel que limité par l'ouverture du masque 4, peut coïncider avec une limitation de ce faisceau qui résulte d'une pupille de l'optique imageante 1. Si la limitation par le masque 4 est plus restrictive que celle par la pupille de l'optique imageante 1, alors les dimensions transversales de l'optique imageante 1, perpendiculairement à l'axe optique A-A, pourraient être réduites. Eventuellement, le masque 4 peut limiter les rayons lumineux qui parviennent au point O à un intervalle angulaire qui est plus petit que celui déterminé par les rayons R1 et R2.

Dans les figures, θ est égal à l'angle, à l'intérieur du plan longitudinal, entre une direction qui est perpendiculaire à la face de sortie FS du composant optique 3 et l'axe optique A-A de l'instrument, tel que cet axe optique existe entre le composant optique 3 et le capteur d'images 2. Le rayon lumineux R2 traversant la face de sortie FS obliquement, et étant alors dévié du fait de la réfraction, l'angle ω est non-nul. Autrement dit, pour appliquer l'invention, les faces d'entrée FE et de sortie FS du composant optique 3 ne sont pas parallèles entre elles.

[Fig. 2b] montre l'efficacité de l'invention pour supprimer les rayons parasites du type de celui désigné par RP1 plus haut. FP1 désigne un premier faisceau de rayons parasites qui sont produits par la réflexion sur la surface photosensible SP du capteur d'images 2 en direction du bord de masque BM1. La partie de ce faisceau FP1 qui est à gauche du rayon R1 dans la figure est directement occultée par le masque 4 au niveau du bord de masque BM1, alors que la partie complémentaire de ce faisceau FP1 est réfléchie par la face de sortie FS du composant optique 3, puis de nouveau par la surface photosensible SP du capteur d'images 2 en dehors du point O pour revenir en direction du masque 4 à droite du rayon R2. Cette partie complémentaire du faisceau FP1 est alors occultée par le bord de masque BM2. Pour cela, selon l'invention, l'angle θ est supérieur à Arcsin[B/(2·L)], où Arcsin() désigne la fonction réciproque du sinus, et B et L ont les significations données plus haut.

[Fig. 2c] montre l'efficacité de l'invention pour supprimer les rayons parasites du type de celui désigné par RP2 plus haut. FP2 désigne un deuxième faisceau de rayons parasites qui sont produits par la réflexion sur la surface photosensible SP du capteur d'images 2 en direction du bord de masque BM2. La partie de ce faisceau FP2 qui est à droite du rayon R2 dans la figure est directement occultée par le masque 4 au niveau du bord de masque BM2, alors que la partie complémentaire de ce faisceau FP2 est réfléchie par la face d'entrée FE du composant optique 3, puis de nouveau par la surface photosensible SP du capteur d'images 2 en dehors du point O pour revenir en direction du masque 4 à gauche du rayon R1. Cette partie complémentaire du faisceau FP2 est alors occultée par le bord de masque BM1. Pour cela, selon l'invention, l'angle ω est supérieur à Arcsin[B/(nL)], approximativement, où n désigne encore l'indice de réfraction du matériau du composant optique 3.

[Fig. 2d] montre l'efficacité de l'invention pour supprimer des rayons parasites qui subissent plusieurs réflexions internes dans le composant optique 3, du type du rayon parasite qui a été désigné plus haut par RP3. Le troisième faisceau de rayons parasites FP3 est identique au deuxième faisceau FP2 jusqu'à sa réflexion interne sur la face d'entrée FE du composant optique 3, mais il subit ensuite une réflexion interne sur la face de sortie FS, puis une autre réflexion interne sur la face d'entrée FE. Le faisceau FP3 est alors dévié en dehors de l'ouverture du masque 4 après avoir retraversé la face de sortie FS, quel que soit le nombre de réflexions internes qu'il subit à l'intérieur du composant optique 3.

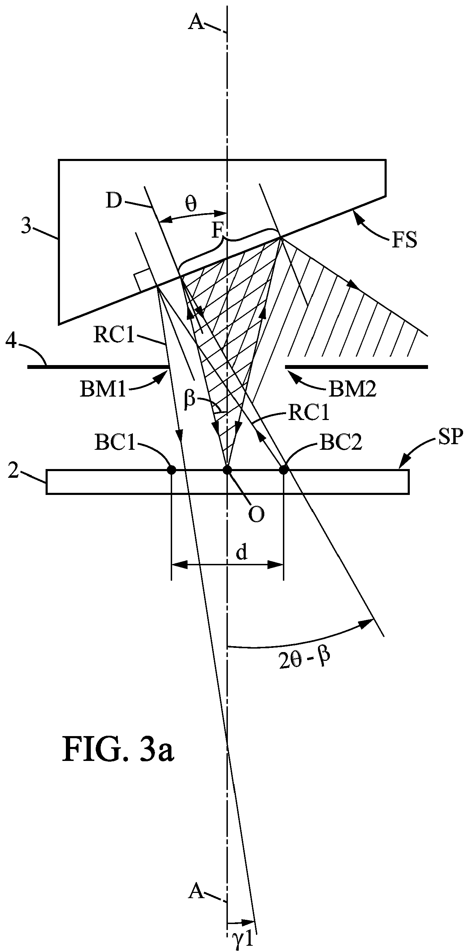

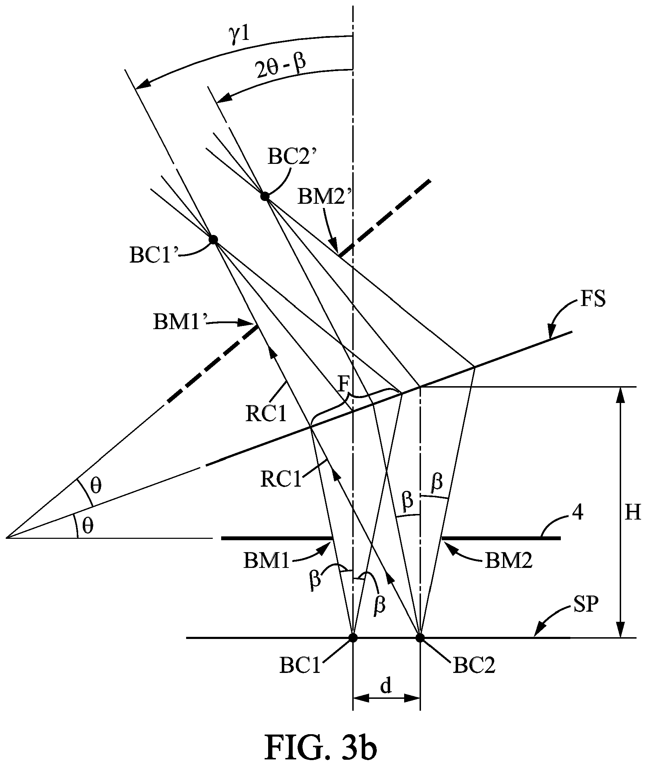

L'invention est maintenant décrite dans le cas où le capteur d'images 2 comporte plusieurs lignes juxtaposées de photodétecteurs. Autrement dit, la partie utile de sa surface photosensible SP s'étend entre deux points distincts BC1 et BC2, appelés bords de champ. Le plan longitudinal est perpendiculaire aux lignes de photodétecteurs, et les bords de champ BC1 et BC2 sont dans l'intersection de ce plan longitudinal avec la surface photosensible SP. La portion de la surface photosensible SP qui est comprise entre les lignes de photodétecteurs qui passent par les bords de champ BC1 et BC2 est le champ d'image. Elle est notée [BC1, BC2] et la distance dans le plan longitudinal entre les deux bords de champ BC1 et BC2, notée d, est non-nulle. Une telle extension transversale du champ d'image permet à des rayons parasites qui proviennent d'un point de ce champ d'image d'être réfléchis en revenant en d'autres points qui sont aussi à l'intérieur du champ d'image. Par exemple, [Fig. 3a] montre un rayon RC1 qui provient de la surface photosensible SP au bord de champ BC2, puis qui est réfléchi par la face de sortie FS du composant optique 3, et qui est de nouveau incident sur la surface photosensible SP. Il peut être réfléchi de nouveau par cette surface photosensible SP dans une direction qui est à l'intérieur de la pupille, si bien qu'il pourrait encore revenir vers le capteur d'images 2 après des réflexions parasites ultérieures dans l'optique imageante 1. La description qui suit, en référence à [Fig. 3a] et [Fig. 3b], concerne une mise en oeuvre de l'invention qui est destinée à supprimer ces rayons parasites dus à la face de sortie FS du composant optique 3. Ces figures sont construites à l'intérieur du plan longitudinal, et [Fig. 3a] montre :

- le champ d'image [BC1, BC2] dans la surface photosensible SP du capteur d'images 2,
- la face de sortie FS du composant optique 3,
- l'axe optique A-A de l'instrument 10 tel qu'effectif entre la face de sortie FS et la surface photosensible SP, et
- le masque 4 qui est introduit par l'invention, et dont l'ouverture est limitée entre les bords de masque BM1 et BM2, le masque 4 étant situé entre la surface photosensible SP et la face de sortie FS le long de l'axe optique A-A.

Le bord de masque BM1 et le bord de champ BC1 sont tous deux à gauche de l'axe optique A-A dans le plan longitudinal, alors que le bord de masque BM2 et le bord de champ BC2 sont tous deux à droite de l'axe optique A-A. Le bord de masque BM1 est destiné à limiter un faisceau de rayons lumineux qui est transmis par l'optique imageante 1 à travers le composant optique 3, en direction du bord de champ BC1. De même, le bord de masque BM2 est destiné à limiter un autre faisceau de rayons lumineux qui est transmis par l'optique imageante 1 à travers le composant optique 3, en direction du bord de champ BC2.

[Fig. 3a] montre la généralisation du premier rayon lumineux R1 qui a été introduit en relation avec [Fig. 2a] au cas où le champ d'image [BC1-BC2] possède l'extension transversale d non-nulle. Ce rayon R1 devient le rayon critique RC1 qui est indiqué dans [Fig. 3a], en étant issu du bord de champ BC2, réfléchi par la face de sortie FS du composant optique 3, puis passant sur le bord de masque BM1. La généralisation de la caractéristique du rayon R1 est que le rayon critique RC1, après sa réflexion sur la face de sortie FS, soit angulairement à l'extérieur d'un faisceau qui converge sur la surface photosensible SP pour former l'image nominale, et qui est réfléchi par cette surface photosensible SP puis par la face de sortie FS. Un tel faisceau converge initialement par exemple au point O, à l'intersection de l'axe optique A-A avec la surface photosensible SP. Il possède un demi-angle d'ouverture $\beta$ au point O, qui peut être limité par la pupille P de l'optique imageante 1. Après réflexion sur la surface photosensible SP puis sur la face de sortie FS, la limite gauche de ce faisceau forme un angle avec l'axe optique A-A qui est plus petit que celui formé par la limite droite de ce même faisceau. Cet angle de la limite gauche est $2 \cdot \theta - \beta$, où $\theta$ désigne encore l'angle entre la direction perpendiculaire à la face de sortie FS et l'axe optique A-A. Selon l'invention, l'angle $\gamma 1$ que forme le rayon critique RC1 avec l'axe optique A-A après avoir été réfléchi par la face de sortie FS doit être inférieur à $2 \cdot \theta - \beta$. Le fait que cette inégalité soit satisfaite par le rayon critique RC1 qui est issu du bord de champ BC2 et passe sur le bord de masque BM1 assure que cette même inégalité est aussi satisfaite par tous les rayons parasites qui sont issus d'un point quelconque du champ d'image [BC1-BC2], sont réfléchis par la face de sortie FS puis reviennent en direction du capteur d'images 2 en traversant l'ouverture du masque 4 entre les deux bords de masque BM1 et BM2.

[Fig. 3b] correspond à [Fig. 3a] en montrant les images du masque 4 et du capteur d'images 2 qui résultent de la réflexion des rayons lumineux sur la face de sortie FS du composant optique 3. BM1' et BM2' désignent ainsi les images des deux bords de masque BM1 et BM2, respectivement. De même, BC1' et BC2' désignent les images géométriques des deux bords de champ BC1 et BC2, respectivement. Le rayon critique RC1 et le faisceau F tel qu'existant après sa réflexion sur la surface photosensible SP sont dépliés, et permettent de visualiser plus facilement leurs angles avec l'axe optique A-A, respectivement $\gamma 1$ et $2 \cdot \theta - \beta$. [Fig. 3b] a été construite dans le cas de la condition limite $\gamma 1 = 2 \cdot \theta - \beta$, correspondant à une valeur minimale qui est nécessaire pour l'angle $\theta$. Cette valeur minimale est notée $\theta_{min}$, et est donnée par l'équation suivante :

$$\{1-[d/H + \tan(\beta)]^2\} \cdot x^2 - 2 \cdot x \cdot \tan(\beta) - (d/H)^2 - 2 \cdot (d/H) \cdot \tan(\beta)$$

où l'inconnue x est $\tan(\theta_{min})$, $\tan()$ désignant la fonction tangente, et H est la distance entre la surface photosensible SP et la face de sortie FS, mesurée parallèlement à l'axe optique A-A à partir du bord de champ BC2. La valeur qui est ainsi obtenue pour $\theta_{min}$ est indépendante de la position du bord de masque BM1 le long du rayon critique RC1. Le rayon critique RC1 a été appelé premier rayon critique dans la partie générale de la présente description.

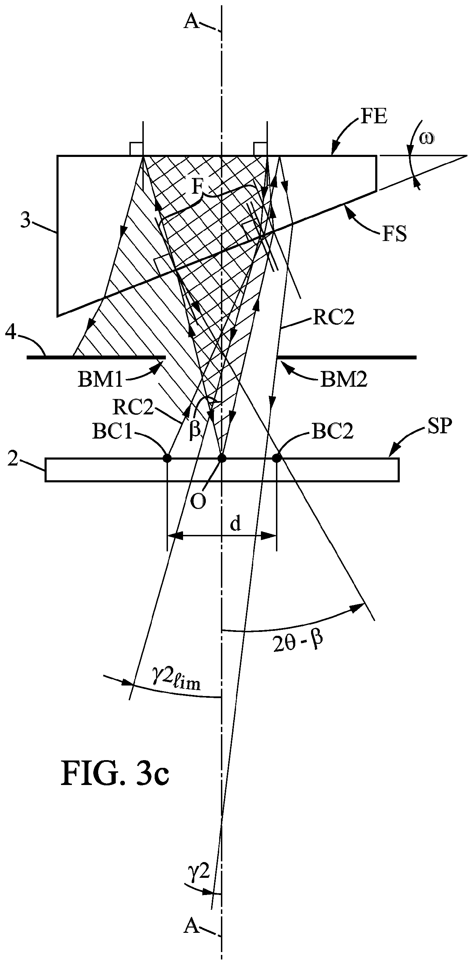

[Fig. 3c] correspond à [Fig. 3a] en remplaçant la réflexion parasite sur la face de sortie FS du composant optique 3 par celle sur sa face d'entrée FE. Le rayon critique RC2 qui y est représenté est une généralisation du second rayon lumineux R2 de [Fig. 2a] au cas où le champ d'image [BC1-BC2] possède l'extension transversale d non-nulle. Pour le rayon critique RC2, le bord de champ BC1 et le bord de masque BM2 jouent les rôles du bord de champ BC2 et du bord de masque BM1 pour le rayon critique RC1, respectivement. Le rayon critique RC2 est ainsi issu du bord de champ BC1, puis subit la réfraction lorsqu'il traverse la face de sortie FS, puis est réfléchi par la face d'entrée FE à l'intérieur du composant optique 3, puis subit de nouveau la réfraction lorsqu'il traverse en sens inverse la face de sortie FS, pour passer sur le bord de masque BM2. Ce rayon critique RC2 a été appelé second rayon critique dans la partie générale de la présente description. Conformément à l'invention, l'angle $\gamma 2$ que forme le rayon critique RC2 avec l'axe optique A-A au niveau du bord de masque BM2 est destiné à être inférieur à au plus petit des angles, par rapport à l'axe optique A-A, formés par les rayons du faisceau F après réflexion sur la surface photosensible SP, traversée de la face de sortie FS, réflexion sur la face d'entrée FE, puis de nouveau traversée de la face de sortie FS. Ce plus petit des angles du faisceau F est noté $\gamma2_{lim}$ dans [Fig. 3c], et remplace pour la réflexion parasite sur la face d'entrée FE, l'angle limite $2 \cdot \theta - \beta$ du cas de la réflexion parasite sur la face de sortie FS. Les angles $\gamma2$ et $\gamma2_{lim}$ ont tous les deux un même sens, qui est opposé à celui de $\gamma1$ et $2 \cdot \theta - \beta$, et l'inégalité $\gamma2 < \gamma2_{lim}$ est à appliquer aux valeurs positives de ces angles qui sont relatives à leur sens commun. L'Homme du métier saura alors construire une figure dépliée pour la réflexion parasite sur la face d'entrée FE, équivalente à [Fig. 3b] qui était relative à la réflexion sur la face de sortie FS. Une fois l'angle $\theta$ fixé pour la face de sortie FS, par exemple à une valeur qui est supérieure à la limite $\theta_{min}$ déterminée en considérant le rayon critique RC1, une valeur minimale $\omega_{min}$ peut être déterminée selon l'invention pour l'angle $\omega$ en considérant rayon critique RC2. Cette valeur $\omega_{min}$ est non-nulle, de sorte que la face d'entrée FE et la face de sortie FS du composant optique 3 ne sont pas parallèles. La valeur qui est ainsi obtenue pour $\omega_{min}$ est indépendante de la position du bord de masque BM2 le long du rayon critique RC2.

Lorsque les deux angles $\theta$ et $\omega$ sont supérieurs à $\theta_{min}$ et $\omega_{min}$, respectivement, pour appliquer l'invention à la face de sortie FS et à la face d'entrée FE du composant optique 3, les rayons parasites qui résultent de plusieurs réflexions à l'intérieur du composant optique 3, sur la face d'entrée FE, puis sur la face de sortie FS, etc, d'une façon qui est similaire au faisceau de rayons parasites FP3 de [Fig. 2d], sont tous rejetés en dehors de la pupille de l'instrument.

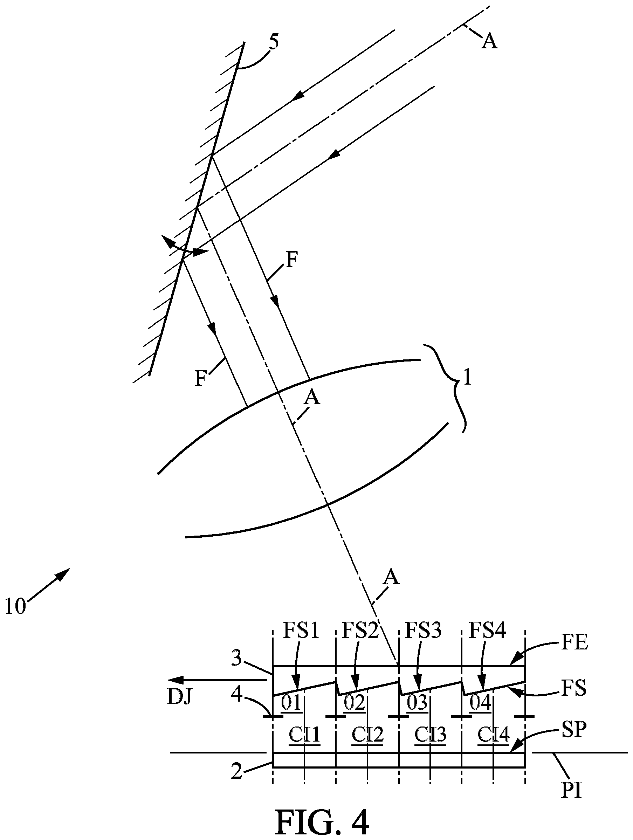

Dans le mode de réalisation de l'invention de [Fig. 4], la face de sortie FS du composant optique 3 possède une structure d'échelle, par exemple à quatre facettes élémentaires en formes de bandes qui sont allongées perpendiculairement au plan de la figure, et désignées par les références FS1-FS4. Ces bandes sont incluses dans des plans respectifs qui sont tous parallèles et décalés de l'un au suivant selon un pas constant. DJ est la direction de juxtaposition des facettes FS1-FS4 dans la face de sortie FS. Chaque facette élémentaire peut être recouverte d'un filtre interférentiel dont la fenêtre de transmission spectrale varie d'un filtre à l'autre. De façon connue, de tels filtres interférentiels sont constitués chacun d'un empilement de couches minces transparentes qui sont superposées sur la facette élémentaire correspondante. Lorsqu'un tel composant optique 3 est utilisé, il détermine autant de portions distinctes de champ d'image sur la surface photosensible SP du capteur d'images 2. Ainsi, la portion de champ d'image CI1 est associée à la facette élémentaire FS1 et à la bande spectrale du filtre de cette facette FS1, la portion de champ d'image CI2 est associée à la facette élémentaire FS2 et à la bande spectrale du filtre de cette facette FS2, et la même chose avec la portion de champ d'image CI3 pour la facette FS3, et aussi avec la portion de champ d'image CI4 pour la facette FS4. Le masque 4 est alors muni d'une ouverture distincte pour chaque couple formé par une des facettes élémentaires avec la portion de champ d'image qui lui est associée, de façon à mettre en oeuvre l'invention séparément pour chaque facette élémentaire avec l'ouverture correspondante du masque 4. O1 désigne ainsi l'ouverture qui est associée à la facette FS1, O2 l'ouverture associée à la facette FS2, O3 celle de la facette FS3 et O4 celle de la facette FS4. Un système de balayage est alors avantageusement ajouté à l'instrument 10, tel qu'un miroir rotatif 5 par exemple. L'axe de rotation du miroir 5 est orienté de sorte qu'une rotation progressive du miroir provoque un déplacement continu de l'image qui est formée par l'optique imageante 1 sur la surface photosensible SP, parallèlement à la direction de juxtaposition DJ. Ainsi, un même élément de scène peut être saisi en image successivement à l'intérieur de chacun des champs d'image CI1-CI4, pour obtenir une image mutispectrale de la scène complète par réunion des contenus d'images qui sont saisis successivement pour chaque champ d'image. D'autres systèmes de balayage qui sont connus de l'Homme du métier peuvent être utilisés alternativement au miroir rotatif qui est représenté. Un tel instrument d'imagerie multispectrale 10 peut être particulièrement utile pour une utilisation spatiale à bord d'un satellite, afin de recueillir des images de la surface de la Terre simultanément dans plusieurs bandes spectrales. Pour une telle application, l'optique imageante 1 peut être constituée par un télescope, de l'un des types connus de l'Homme du métier.

Il est entendu que l'invention peut être reproduite en modifiant des aspects secondaires des modes de réalisation qui ont été décrits en détail ci-dessus, tout en conservant certains au moins des avantages cités. Notamment, les filtres spectraux peuvent être situés sur la face d'entrée et/ou la face de sortie du composant optique, la forme en échelle peut être celle de la face d'entrée ou celle de la face de sortie. Eventuellement, la face d'entrée et la face de sortie peuvent chacune être en forme d'échelle, à condition que les facettes élémentaires de l'une et l'autre soient cohérentes avec une division utile du champ d'image sur la surface photosensible du capteur d'images. Enfin, le nombre des portions de champ d'image qui sont ainsi déterminées peut être quelconque, pas nécessairement égal à quatre, et chaque portion de champ d'image peut contenir un nombre quelconque de lignes voisines de photodétecteurs, y compris une seule ligne par portion de champ d'image.

**Revendications**

1.    Instrument d'imagerie (10), comprenant :

- une optique imageante (1) adaptée pour former une image, appelée image nominale, dans un plan d'image (PI) à partir de rayons lumineux qui sont transmis par l'optique imageante ;
- un capteur d'images (2) qui possède une surface photosensible (SP), et qui est disposé de sorte que la surface photosensible soit superposée au plan d'image (PI) ; et
- un composant optique (3) qui est situé fixement sur un trajet des rayons lumineux entre l'optique imageante (1) et le capteur d'images (2), ledit composant optique comprenant une portion d'un matériau réfringent et au moins partiellement transparent pour lesdits rayons lumineux, ladite portion ayant deux faces (FE, FS) planes et étant traversée par les rayons lumineux entre lesdites deux faces lors d'une utilisation de l'instrument (10), une partie utile de la surface photosensible (SP) étant limitée par deux points opposés, appelés bords de champ (BC1, BC2), dans un plan longitudinal qui contient un axe optique (A-A) de l'instrument (10), instrument (10) dans lequel la surface photosensible (SP) du capteur d'images (2) et l'une au moins desdites faces (FE, FS) du composant optique (3) possèdent des pouvoirs de réflexion respectifs, tels que les rayons lumineux qui forment l'image nominale sont partiellement réfléchis par la surface photosensible puis par la face du composant optique, et reviennent en direction de ladite surface photosensible, l'instrument (10) étant **caractérisé en ce qu'**il comprend en outre :

- un masque (4), qui est situé fixement sur le trajet des rayons lumineux entre le composant optique (3) et le capteur d'images (2), et qui possède une ouverture limitée dans le plan longitudinal par deux bords de masque (BM1, BM2) opposés, les rayons lumineux passant à travers ladite ouverture lors de l'utilisation de l'instrument (10),

un premier des bords de masque (BM1, BM2) et un premier des bords de champ (BC1, BC2) étant situés, à l'intérieur du plan longitudinal, sur un même premier côté latéral de l'axe optique (A-A) de l'instrument (10) entre le composant optique (3) et le capteur d'images (2), et un second des bords de masque (BM1, BM2) et un second des bords de champ (BC1, BC2) étant situés sur un même second côté latéral de l'axe optique, opposé au premier côté latéral, le premier bord de masque limitant un faisceau lumineux qui est transmis par l'optique d'imagerie (1) et qui converge au premier bord de champ, et le second bord de masque limitant un autre faisceau lumineux qui est transmis par l'optique d'imagerie et qui converge au second bord de champ, et **en ce que**, pour l'une au moins des faces (FE, FS) du composant optique (3) qui possède un pouvoir de réflexion, un angle d'inclinaison d'une direction perpendiculaire à ladite face, par rapport à l'axe optique (A-A) entre le composant optique et le capteur d'images (2) et à l'intérieur du plan longitudinal, est tel qu'un rayon lumineux, appelé rayon critique, qui est issu du second bord de champ puis réfléchi par ladite face du composant optique pour effleurer le premier bord de masque, fasse un angle ($\gamma$1, $\gamma$2) avec ledit axe optique au niveau dudit premier bord de masque, qui est inférieur à un plus petit des angles formés avec ledit axe optique par des réflexions sur la surface photosensible (SP) du capteur d'images puis sur ladite face du composant optique de tous les rayons lumineux qui sont transmis par l'optique imageante (1) en direction dudit capteur d'images.

**2.** Instrument (10) selon la revendication 1, dans lequel l'optique imageante (1) possède une pupille (P) qui est effective pour les rayons lumineux qui sont transmis par ladite optique imageante à travers le composant optique (3) en direction du capteur d'images (2), et dans lequel le rayon critique, après réflexion sur la face du composant optique (3), est orienté angulairement en dehors d'un faisceau tel que résultant de la réflexion sur la surface photosensible (SP) puis sur ladite face du composant optique, des rayons lumineux transmis par l'optique imageante (1) à travers le composant optique, et tels que limités par la pupille (P) de ladite optique imageante.

**3.** Instrument (10) selon la revendication 2, dans lequel le premier bord de masque est superposé dans le plan longitudinal à une première limite générée par la pupille (P) de l'optique imageante (1) et effective pour les rayons lumineux qui parviennent au premier bord de champ, et/ou le second bord de masque est superposé dans le plan longitudinal à une seconde limite générée par la pupille (P) de l'optique imageante (1) et effective pour les rayons lumineux qui parviennent au second bord de champ.

**4.** Instrument (10) selon l'une quelconque des revendications 1 à 3, dans lequel la face du composant optique (3) qui est inclinée pour que le rayon critique soit moins oblique par rapport à l'axe optique (A-A) que tous les rayons lumineux qui sont transmis par l'optique imageante (1), après la réflexion desdits rayons lumineux sur ladite face du composant optique, est une face de sortie (FS) dudit composant optique tournée vers le capteur d'images (2).

**5.** Instrument (10) selon l'une quelconque des revendications 1 à 3, dans lequel le composant optique (3) possède une face de sortie (FS) tournée vers le capteur d'images (2), et une face d'entrée (FE) tournée vers l'optique imageante (1),

et dans lequel la face du composant optique (3) qui est inclinée pour que le rayon critique soit moins oblique par rapport à l'axe optique (A-A) que tous les rayons lumineux qui sont transmis par l'optique imageante (1), après la réflexion desdits rayons lumineux sur ladite face du composant optique, est la face d'entrée (FE), le rayon critique et lesdits rayons lumineux étant soumis à une réfraction chaque fois que ledit rayon critique et lesdits rayons lumineux traversent la face de sortie (FS).

6. Instrument (10) selon l'une quelconque des revendications 1 à 3, dans lequel le composant optique (3) possède une face de sortie (FS) tournée vers le capteur d'images (2), et une face d'entrée (FE) tournée vers l'optique imageante (1), les deux faces d'entrée et de sortie possédant des pouvoirs de réflexion respectifs,

la face de sortie (FS) étant inclinée par rapport à un plan perpendiculaire à l'axe optique (A-A) entre le composant optique (3) et le capteur d'images (2), dans un sens tel qu'une direction perpendiculaire à ladite face de sortie s'éloigne dudit premier bord de masque (BM1) en direction dudit second bord de masque (BM2), et selon une valeur d'angle telle qu'un premier rayon critique (RC1) qui est issu du second bord de champ (BC2), puis est réfléchi par ladite face de sortie pour effleurer le premier bord de masque (BM1), fasse un premier angle ($\gamma$1) par rapport audit axe optique au niveau dudit premier bord de masque, qui est inférieur au plus petit ($2 \cdot \theta - \beta$) des angles formés avec ledit axe optique par des réflexions sur la surface photosensible (SP) puis sur ladite face de sortie de tous les rayons lumineux qui sont transmis par l'optique imageante (1) en direction du capteur d'images,
et la face d'entrée (FE) étant inclinée par rapport à la face de sortie (FS) de sorte qu'un second rayon critique (RC2) qui est issu du premier bord de champ (BC1) traverse la face de sortie, puis est réfléchi par ladite face d'entrée, retraverse la face de sortie pour effleurer le second bord de masque (BM2), fasse un second angle ($\gamma$2) par rapport audit axe optique au niveau dudit second bord de masque, qui est inférieur au plus petit des angles ($\gamma 2_{lim}$) formés avec ledit axe optique par des réflexions sur la surface photosensible (SP) puis sur ladite face d'entrée de tous les rayons lumineux qui sont transmis par l'optique imageante (1) en direction du capteur d'images (2), le second rayon critique et lesdits rayons lumineux étant soumis à une réfraction chaque fois que ledit second rayon critique et lesdits rayons lumineux traversent la face de sortie du composant optique, une direction perpendiculaire à la face de sortie (FS) du composant optique (3) formant un angle ($\theta$) non-nul avec l'axe optique (A-A) tel que ledit axe optique est orienté entre le composant optique (3) et le capteur d'images (2), et
la face d'entrée (FE) et la face de sortie (FS) du composant optique (3) formant entre elles un angle ($\omega$) non-nul.

7. Instrument (10) selon l'une quelconque des revendications précédentes, dans lequel la partie utile de la surface photosensible (SP) du capteur d'images (2) est limitée à un seul photodétecteur à l'intérieur du plan longitudinal,

et dans lequel la face de sortie (FS) du composant optique (3) est perpendiculaire à un premier rayon lumineux (R1) qui parviendrait au photodétecteur, tel que ledit premier rayon lumineux serait orienté au niveau de ladite face de sortie,
et dans lequel la face d'entrée (FE) du composant optique (3) est perpendiculaire à un second rayon lumineux (R2) qui parviendrait au photodétecteur après avoir traversé le composant optique, tel que ledit second rayon lumineux serait orienté au niveau de ladite face d'entrée,
et dans lequel le masque (4) est adapté pour limiter le faisceau des rayons lumineux qui parviennent au photodétecteur en ayant été transmis par l'optique imageante (1), à un secteur angulaire qui est compris entre les premier (R1) et second (R2) rayons lumineux à l'intérieur du plan longitudinal.

8. Instrument (10) selon l'une quelconque des revendications précédentes, dans lequel le composant optique (3) est un filtre spectral, ou un ensemble de filtres spectraux juxtaposés chacun en forme de bande, chaque filtre spectral étant efficace pour transmettre sélectivement des rayons lumineux qui sont contenus dans une fenêtre spectrale dudit filtre spectral.

9. Instrument (10) selon l'une quelconque des revendications précédentes, dans lequel la face ou l'une des faces du composant optique (3) qui possède un pouvoir de réflexion comporte plusieurs facettes élémentaires (FS1-FS4) en formes de bandes qui sont juxtaposées selon une direction de juxtaposition (DJ) perpendiculaire à une direction longitudinale commune de toutes les facettes élémentaires, avec des plans contenant un-à-un lesdites facettes élémentaires qui sont tous parallèles et décalés entre eux,

des rayons lumineux transmis par l'optique imageante (1) qui traversent des facettes élémentaires (FS1-FS4) différentes convergeant vers des parties disjointes de la surface photosensible (SP) du capteur d'images (2), une ouverture respective du masque (01-04) étant dédiée à chaque facette élémentaire (FS1-FS4) séparément des autres facettes élémentaires de façon à reproduire les caractéristiques de la revendication 1 pour toutes les facettes élémentaires,
et l'instrument (10) est combiné avec un système de balayage (5) adapté pour déplacer l'image nominale sur la surface photosensible (SP) du capteur d'images (2) selon une direction de balayage qui possède une composante parallèle à la direction de juxtaposition (DJ) des facettes élémentaires (FS1-FS4).

10. Instrument (10) selon la revendication 9, dans lequel le composant optique (3) comporte N facettes élémentaires qui sont juxtaposées, et toutes inclinées selon un même angle par rapport à l'axe optique (A-A) dans le plan longitudinal, N étant un nombre entier supérieur ou égal à deux et inférieur ou égal à seize.

11. Instrument (10) selon la revendication 9 ou 10, dans lequel chaque facette élémentaire (FS1-FS4) du composant optique (3) est associée à un filtre spectral respectif, de sorte qu'une fenêtre spectrale de transmission qui est associée à l'une desdites facettes élémentaires soit différente de la fenêtre spectrale de transmission qui est associée à chaque autre facette élémentaire.

12. Instrument (10) selon l'une quelconque des revendications précédentes, dans lequel l'optique imageante (1) est un télescope.

13. Procédé d'imagerie, utilisant un instrument d'imagerie (10) qui est conforme à l'une quelconque des revendications précédentes.

14. Procédé d'imagerie selon la revendication 13, de type procédé d'imagerie multispectrale, suivant lequel l'instrument d'imagerie (10) est conforme à la revendication 11, et suivant lequel ledit instrument d'imagerie est utilisé à bord d'un satellite en orbite autour de la Terre.

## Patentansprüche

1. Bildgebungsinstrument (10), aufweisend:

- eine Abbildungsoptik (1), die eingerichtet ist, um ausgehend von Lichtstrahlen, die von der Abbildungsoptik übertragen werden, ein Bild, genannt nominales Bild, in einer Bildebene (PI) zu erzeugen;
- einen Bildsensor (2), der eine lichtempfindliche Oberfläche (SP) aufweist und der derart angeordnet ist, dass die lichtempfindliche Oberfläche der Bildebene (PI) überlagert ist; und
- eine optische Komponente (3), die auf einem Pfad der Lichtstrahlen ortsfest zwischen der Abbildungsoptik (1) und dem Bildsensor (2) angeordnet ist, wobei die optische Komponente einen Bereich eines lichtbrechenden und für die Lichtstrahlen mindestens teilweise transparenten Materials aufweist, wobei der Bereich zwei ebene Flächen (FE, FS) hat und bei einer Verwendung des Instruments (10) zwischen den zwei Flächen von den Lichtstrahlen durchquert wird,
wobei ein nutzbarer Teil der lichtempfindlichen Oberfläche (SP) in einer Längsebene, die eine optische Achse (A-A) des Instruments (10) enthält, von zwei sich gegenüberliegenden Punkten, genannt Feldränder (BC1, BC2), begrenzt wird,
wobei in dem Instrument (10) die lichtempfindliche Oberfläche (SP) des Bildsensors (2) und mindestens eine der Flächen (FE, FS) der optischen Komponente (3) jeweilige Reflexionsvermögen besitzen, so dass die Lichtstrahlen, die das nominale Bild erzeugen, von der lichtempfindlichen Oberfläche, dann von der Fläche der optischen Komponente teilweise reflektiert werden und in Richtung der lichtempfindlichen Oberfläche zurückkehren,
wobei das Instrument (10) **dadurch gekennzeichnet ist, dass** es ferner aufweist:

- eine Maske (4), die auf dem Pfad der Lichtstrahlen ortsfest zwischen der optischen Komponente (3) und dem Bildsensor (2) angeordnet ist und eine Öffnung aufweist, die in der Längsebene von zwei sich gegenüberliegenden Maskenrändern (BM1, BM2) begrenzt wird, wobei bei der Verwendung des Instruments (10) die Lichtstrahlen durch die Öffnung hindurchgehen,

wobei in der Längsebene ein erster der Maskenränder (BM1, BM2) und ein erster der Feldränder (BC1, BC2) auf einer gleichen ersten lateralen Seite der optischen Achse (A-A) des Instruments (10) zwischen der optischen Komponente (3) und dem Bildsensor (2) angeordnet sind, und ein zweiter der Maskenränder (BM1, BM2) und ein zweiter der Feldränder (BC1, BC2) auf einer gleichen zweiten lateralen Seite der optischen Achse (A-A), die der ersten lateralen Seite gegenüberliegt, angeordnet sind,

wobei der erste Maskenrand ein Lichtbündel begrenzt, das von der Abbildungsoptik (1) übertragen wird und das zum ersten Feldrand konvergiert, und der zweite Maskenrand ein anderes Lichtbündel begrenzt, das von der Abbildungsoptik übertragen wird und das zum zweiten Feldrand konvergiert,

und dadurch, dass für mindestens diejenige der Flächen (FE, FS) der optischen Komponente (3), die ein Reflexionsvermögen besitzt, ein Neigungswinkel einer zu der Fläche senkrechten Richtung bezüglich der optischen Achse (A-A) zwischen der optischen Komponente und dem Bildsensor (2) und in der Längsebene derart ist, dass ein Lichtstrahl, genannt kritischer Strahl, der von dem zweiten Feldrand herkommt, dann von der besagten Fläche der optischen Komponente reflektiert wird, um den ersten Maskenrand zu streifen, in Höhe des ersten Maskenrands einen Winkel ($\gamma$1, $\gamma$2) mit der optischen Achse bildet, der kleiner ist als ein kleinster der Winkel, die Reflexionen an der lichtempfindlichen Oberfläche (SP) des Bildsensors, dann an der besagten Fläche der optischen Komponente aller von der Abbildungsoptik (1) in Richtung des Bildsensors übertragener Lichtstrahlen mit der optischen Achse bilden.

2. Instrument (10) nach Anspruch 1, in welchem die Abbildungsoptik (1) eine Pupille (P) besitzt, die für die Lichtstrahlen wirksam ist, die von der Abbildungsoptik durch die optische Komponente (3) hindurch in Richtung des Bildsensors (2) übertragen werden,

und in welchem der kritische Strahl nach Reflexion an der Fläche der optischen Komponente (3) angular außerhalb eines Bündels orientiert ist, wie ein solches aus der Reflexion an der lichtempfindlichen Oberfläche (SP), dann an der besagten Fläche der optischen Komponente der von der Abbildungsoptik (1) über die optische Komponente übertragenen und von der Pupille (P) der Abbildungsoptik begrenzten Lichtstrahlen resultiert.

3. Instrument (10) nach Anspruch 2, in welchem

der erste Maskenrand in der Längsebene von einer ersten Grenze überlagert ist, die von der Pupille (P) der Abbildungsoptik (1) erzeugt und für die Lichtstrahlen wirksam ist, die zu dem ersten Feldrand gelangen, und/oder der zweite Maskenrand in der Längsebene von einer zweiten Grenze überlagert ist, die von der Pupille (P) der Abbildungsoptik (1) erzeugt und für die Lichtstrahlen wirksam ist, die zu dem zweiten Feldrand gelangen.

4. Instrument (10) nach einem der Ansprüche 1 bis 3, in welchem diejenige Fläche der optischen Komponente (3), die geneigt ist, damit der kritische Strahl bezüglich der optischen Achse (A-A) weniger schräg als alle von der Abbildungsoptik (1) übertragenen Lichtstrahlen nach Reflexion der Lichtstrahlen an der besagten Fläche der optischen Komponente ist, eine dem Bildsensor (2) zugewandte Austrittsfläche (FS) der optischen Komponente ist.

5. Instrument (10) nach einem der Ansprüche 1 bis 3,

in welchem die optische Komponente (3) eine dem Bildsensor (2) zugewandte Austrittsfläche (FS) und eine der Abbildungsoptik (1) zugewandte Eintrittsfläche (FE) aufweist, und in welchem diejenige Fläche der optischen Komponente (3), die geneigt ist, damit der kritische Strahl bezüglich der optischen Achse (A-A) weniger schräg als alle von der Abbildungsoptik (1) übertragenen Lichtstrahlen nach Reflexion der Lichtstrahlen an der besagten Fläche der optischen Komponente ist, die Eintrittsfläche (FE) ist, wobei jedes Mal, wenn der kritische Strahl und die Lichtstrahlen die Austrittsfläche (FS) überqueren, der kritische Strahl und die Lichtstrahlen einer Brechung unterworfen werden.

6. Instrument (10) nach einem der Ansprüche 1 bis 3,

in welchem die optische Komponente (3) eine dem Bildsensor (2) zugewandte Austrittsfläche (FS) und eine der Abbildungsoptik (1) zugewandte Eintrittsfläche (FE) aufweist, wobei die Austrittsfläche und die Eintrittsfläche jeweilige Reflexionsvermögen haben, wobei die Austrittsfläche (FS) bezüglich einer Ebene, die senkrecht zur optischen Achse (A-A) zwischen der optischen Komponente (3) und dem Bildsensor (2) ist, in einem solchen Sinne, dass eine zur Austrittsfläche senkrechte Richtung sich von dem ersten Maskenrand (BM1) in Richtung des zweiten Maskenrands (BM2) entfernt, und mit einem solchen Winkelwert geneigt ist, dass ein erster kritischer Strahl (RC1), der von dem zweiten Feldrand (BC2) herkommt, dann von der Austrittsfläche reflektiert wird, um den ersten Maskenrand (BM1) zu streifen, einen ersten Winkel (γ1) bezüglich der optischen Achse in Höhe des ersten Maskenrands bildet, der kleiner ist als der kleinste (2*Θ - β) der Winkel, die Reflexionen an der lichtempfindlichen Oberfläche (SP), dann an der Austrittsfläche aller von der Abbildungsoptik (1) in Richtung des Bildsensors übertragener Lichtstrahlen mit der optischen Achse bilden,

und die Eintrittsfläche (FE) bezüglich der Austrittsfläche (FS) geneigt ist, derart, dass ein zweiter kritischer Strahl (RC2), der von dem ersten Feldrand (BC1) herkommt, die Austrittsfläche überquert, dann von der Eintrittsfläche reflektiert wird, wieder die Austrittsfläche überquert, um den zweiten Maskenrand (BM2) zu streifen, einen zweiten Winkel (γ2) bezüglich der optischen Achse in Höhe der zweiten Maske bildet, der kleiner ist als der kleinste der Winkel (γ2lim), den Reflexionen an der lichtempfindlichen Oberfläche (SP), dann an der Eintrittsfläche aller von der Abbildungsoptik (1) in Richtung des Bildsensors (2) übertragener Lichtstrahlen mit der optischen Achse bilden, wobei jedes Mal, wenn der zweite kritische Strahl und die Lichtstrahlen die Austrittsfläche der optischen Komponente überqueren, der zweite kritische Strahl und die Lichtstrahlen einer Brechung unterworfen werden,

eine zur Austrittsfläche (FS) der optischen Komponente (3) senkrechte Richtung einen Winkel (Θ) von ungleich Null mit der optischen Achse (A-A), so wie diese optische Achse zwischen der optischen Komponente (3) und dem Bildsensor (2) orientiert ist, bildet, und

die Eintrittsfläche (FE) und die Austrittsfläche (FS) der optischen Komponente miteinander einen Winkel (ω) von ungleich Null bilden.

7. Instrument (10) nach einem der vorstehenden Ansprüche, in welchem der nutzbare Teil der lichtempfindlichen Oberfläche (SP) des Bildsensors (2) in der Längsebene auf einen einzigen Fotodetektor begrenzt ist,

und in welchem die Austrittsfläche (FS) der optischen Komponente (3) senkrecht zu einem ersten Lichtstrahl (R1) ist, der zu dem Fotodetektor gelangen würde, so, wie der erste Lichtstrahl in Höhe der Austrittsfläche orientiert wäre,

und in welchem die Eintrittsfläche (FE) der optischen Komponente (3) senkrecht zu einem zweiten Lichtstrahl (R2) ist, der nach Überqueren der optischen Komponente zu dem Fotodetektor gelangen würde, so, wie der zweite Lichtstrahl in Höhe der Eintrittsfläche orientiert wäre,

und in welchem die Maske (4) eingerichtet ist, um das Bündel der Lichtstrahlen, die dadurch, dass sie von der Abbildungsoptik (1) übertragen worden sind, zu dem Fotodetektor gelangen, auf einen Winkelsektor zu begrenzen, der in der Längsebene zwischen dem ersten (R1) und dem zweiten (R2) Lichtstrahl liegt.

8. Instrument (10) nach einem der vorstehenden Ansprüche, in welchem die optische Komponente (3) ein Spektralfilter oder ein Satz von nebeneinander angeordneten Spektralfiltern, jedes in Form eines Bandfilters, ist, wobei jedes Spektralfilter wirksam ist, um Lichtstrahlen, die in einem Spektralfenster des Spektralfilters enthalten sind, selektiv zu übertragen.

9. Instrument (10) nach einem der vorstehenden Ansprüche, in welchem die Fläche oder diejenige der Flächen der optischen Komponente (3), die ein Reflexionsvermögen besitzt, mehrere elementare Facetten (FS1-FS4) in Form von Streifen aufweist, die in einer Anordnungsrichtung (DJ), die senkrecht zu einer gemeinsamen Längsrichtung aller elementarer Facetten ist, nebeneinander angeordnet sind, wobei die elementaren Facetten eins zu eins in Ebenen enthalten sind, die alle parallel und zueinander versetzt sind,

wobei von der Abbildungsoptik (1) übertragene Lichtstrahlen, die unterschiedliche elementare Facetten (FS1-FS4) überqueren, hin zu getrennten Teilen der lichtempfindlichen Oberfläche (SP) des Bildsensors (2) konvergieren,

jeder elementaren Facette (FS1-FS4) separat von anderen elementaren Facetten eine jeweilige Öffnung der Maske (01-04) zugeordnet ist, um so die Merkmale des Anspruchs 1 für alle elementaren Facetten wiederzugeben,

und das Instrument (10) mit einem Abtastsystem (5) kombiniert ist, das eingerichtet ist, um das nominale Bild auf der lichtempfindlichen Oberfläche (SP) des Bildsensors (2) in eine Abtastrichtung abzutasten, die eine zur Anordnungsrichtung (DJ) der elementaren Facetten (FS1-FS4) parallele Komponente besitzt.

10. Instrument (10) nach Anspruch 9, in welchem die optische Komponente (3) N elementare Facetten aufweist, die in der Längsebene nebeneinander angeordnet und alle in einem gleichen Winkel bezüglich der optischen Achse (A-A) geneigt sind, wobei N eine ganze Zahl größer oder gleich zwei und kleiner oder gleich sechzehn ist.

11. Instrument (10) nach Anspruch 9 oder 10, in welchem jede elementare Facette (FS1-FS4) der optischen Komponente (3) mit einem jeweiligen Spektralfilter assoziiert ist, derart, dass ein spektrales Übertragungsfenster, das mit einer der elementaren Facetten assoziiert ist, sich von dem spektralen Übertragungsfenster, das mit jeder anderen elementaren Facette assoziiert ist, unterscheidet.

12. Instrument (10) nach einem der vorstehenden Ansprüche, in welchem die Abbildungsoptik (1) ein Teleskop ist.

13. Bildgebungsverfahren, das ein Bildgebungsinstrument (10) nach einem der vorstehenden Ansprüche verwendet.

14. Bildgebungsverfahren nach Anspruch 13 vom Typ multispektrales Bildgebungsverfahren, gemäß welchem das Bildgebungsinstrument (10) Anspruch 11 entspricht und gemäß welchem das Bildgebungsinstrument an Bord eines Satelliten in einer Erdumlaufbahn verwendet wird.

**Claims**

1. An imaging instrument (10), comprising:

   - an imaging optical system (1) adapted to form an image, referred to as a nominal image, in an image plane (IP) from light rays which are transmitted by the imaging optical system;
   - an image sensor (2) which has a photosensitive surface (SP), and which is arranged so that the photosensitive surface is superimposed on the image plane (IP); and
   - an optical component (3) which is positioned fixedly on a path of the light rays between the imaging optical system (1) and the image sensor (2), said optical component comprising a portion of a material that is refracting and at least partially transparent to said light rays, said portion having two plane faces (FE, FS) and being traversed by the light rays between said two faces during use of the instrument (10),
   a useful part of the photosensitive surface (SP) being limited by two opposite points, referred to as field edges (BC1, BC2), in a longitudinal plane which contains an optical axis (A-A) of the instrument (10),
   the instrument (10) wherein the photosensitive surface (SP) of the image sensor (2) and at least one of said faces (FE, FS) of the optical component (3) have respective reflection powers such that the light rays which form the nominal image are partially reflected by the photosensitive surface then by the face of the optical component, and return towards said photosensitive surface, the instrument (10) being **characterised in that** it further comprises:

      - a mask (4), which is positioned fixed on the path of the light rays between the optical component (3) and the image sensor (2), and which has an aperture delimited in the longitudinal plane by two opposite mask edges (BM1, BM2), the light rays passing through said aperture during the use of the instrument (10),

   a first one of the mask edges (BM1, BM2) and a first one of the field edges (BC1, BC2) being located, within the longitudinal plane, on one same first lateral side of the optical axis (A-A) of the instrument (10) between the optical component (3) and the image sensor (2), and a second one of the mask edges (BM1, BM2) and a second one of the field edges (BC1, BC2) being located on one same second lateral side of the optical axis, opposite the first lateral side, the first mask edge limiting a light beam which is transmitted by the imaging optical system (1) and which converges at the first field edge, and the second mask edge limiting another light beam which is transmitted by the imaging optical system and which converges at the second field edge,
   and **in that**, for at least one of the faces (FE, FS) of the optical component (3) which has reflecting power, an angle of inclination of a direction perpendicular to said face, with respect to the optical axis (A-A) between the optical component and the image sensor (2) and within the longitudinal plane, is such that a light beam, referred to as a critical beam, which originates from the second field edge and then reflected by said face of the optical component to graze the first mask edge, forms an angle ($\gamma1$, $\gamma2$) with said optical axis at said first mask edge, which is smaller than a smallest one of the angles formed with said optical axis by reflections on the photosensitive surface (SP) of the image sensor then on said face of the optical component of all of the light rays which are transmitted by the imaging optical system (1) in direction of said image sensor.

2. The instrument (10) according to claim 1, wherein the imaging optical system (1) has a pupil (P) which is effective for the light rays which are transmitted by said imaging optical system through the optical component (3) towards the image sensor (2), and wherein the critical ray, after reflection on the face of the optical component (3), is angularly oriented outside a beam such as resulting from the reflection on the photosensitive surface (SP) then on said face of the optical component, of the light rays transmitted by the imaging optical system (1) through the optical component, and such as limited by the pupil (P) of said imaging optical system.

3. The instrument (10) according to claim 2, wherein the first mask edge is superimposed in the longitudinal plane on a first limit generated by the pupil (P) of the imaging optical system (1) and effective for the light rays which reach the first field edge, and/or
the second mask edge is superimposed in the longitudinal plane on a second limit generated by the pupil (P) of the imaging optical system (1) and effective for the light rays that reach the second field edge.

4. The instrument (10) according to any one of claims 1 to 3, wherein the face of the optical component (3) which is inclined so that the critical ray is less oblique with respect to the optical axis (A-A) than all the light rays which are transmitted by the imaging optical system (1), after the reflexion of said light rays on said face of the optical component, is an output face (FS) of said optical component facing the image sensor (2).

5. The instrument (10) according to any one of claims 1 to 3, wherein the optical component (3) has an output face (FS) facing the image sensor (2), and an input face (FE) facing the imaging optical system (1),

and wherein the face of the optical component (3) which is inclined so that the critical ray is less oblique with respect to the optical axis (A-A) than all the light rays which are transmitted by the imaging optical system (1), after the reflection of said light rays on said face of the optical component, is the input face (FE),
the critical ray and said light rays being subjected to refraction each time said critical ray and said light rays pass through the output face (FS).

6. The instrument (10) according to any one of claims 1 to 3, wherein the optical component (3) has an output face (FS) facing the image sensor (2), and an input face (FE) facing the imaging optical system (1), both input and output faces having respective reflection powers,

the output face (FS) being inclined with respect to a plane perpendicular to the optical axis (A-A) between the optical component (3) and the image sensor (2), in a direction such that a direction perpendicular to said output face moves away from said first mask edge (BM1) towards said second mask edge (BM2), and by an angle value such that a first critical ray (RC1) which originates from the second field edge (BC2), then is reflected by said output face to graze the first mask edge (BM1), forms a first angle ($\gamma$1) relative to said optical axis at said first mask edge, which is smaller than the smallest one ($2 \cdot \theta - \beta$) of the angles formed with said optical axis by reflections on the photosensitive surface (SP) then on said output face of all the light rays which are transmitted by the imaging optical system (1) towards of the image sensor,
and the input face (FE) being inclined relative to the output face (FS) so that a second critical ray (RC2) which originates from the first field edge (BC1) traverses the output face, then is reflected by said input face, crosses the output face again to graze the second mask edge (BM2), forms a second angle ($\gamma$2) relative to said optical axis at said second mask edge, which is smaller than the smallest one of the angles ($\gamma2_{lim}$) formed with said optical axis by reflections on the photosensitive surface (SP) and then on said input face of all the light rays which are transmitted by the imaging optical system (1) towards the image sensor (2), the second critical ray and said light rays being subjected to refraction each time that said second critical ray and said light rays traverse the output face of the optical component,
a direction perpendicular to the output face (FS) of the optical component (3) forming a non-zero angle ($\theta$) with the optical axis (A-A) such that said optical axis is oriented between the optical component (3) and the image sensor (2), and
the input face (FE) and the output face (FS) of the optical component (3) forming between them a non-zero angle ($\omega$).

7. The instrument (10) according to any one of the preceding claims, wherein the useful part of the photosensitive surface (SP) of the image sensor (2) is limited to a single photodetector within the longitudinal plane,

and wherein the output face (FS) of the optical component (3) is perpendicular to a first light ray (R1) which would reach the photodetector, such that said first light ray would be oriented at said output face,
and wherein the input face (FE) of the optical component (3) is perpendicular to a second light ray (R2) which would reach the photodetector after having traversed the optical component, such that said second light ray would be oriented at said input face,
and wherein the mask (4) is adapted to limit the beam of light rays which reach the photodetector having been transmitted by the imaging optical system (1), to an angular sector which is comprised between the first (R1) and second (R2) light rays within the longitudinal plane.

8. The instrument (10) according to any one of the preceding claims, wherein the optical component (3) is a spectral filter, or a set of juxtaposed spectral filters each in form of a strip, each spectral filter being effective for selectively transmitting light rays which are contained within a spectral window of said spectral filter.

9. The instrument (10) according to any one of the preceding claims, wherein the face or one of the faces of the optical component (3) which has reflecting power comprises a plurality of elementary strip-like facets (FS1-FS4) which are juxtaposed in a juxtaposition direction (DJ) perpendicular to a common longitudinal direction of all the elementary facets, with planes containing said elementary facets one-by-one which are all parallel and offset from one another,

light rays transmitted by the imaging optical system (1) which traverse different elementary faces (FS1-FS4) converging towards disjoint parts of the photosensitive surface (SP) of the image sensor (2),
a respective aperture of the mask (01-04) being dedicated to each elementary facet (FS1-FS4) separately from the other elementary facets so as to reproduce the features of claim 1 for all the elementary facets,
and the instrument (10) is combined with a scanning system (5) adapted to move the nominal image on the photosensitive surface (SP) of the image sensor (2) according to a scanning direction which has a component parallel to the juxtaposition direction (DJ) of the elementary facets (FS1-FS4).

10. The instrument (10) according to claim 9, wherein the optical component (3) includes N elementary facets which are juxtaposed, and all inclined at one same angle relative to the optical axis (A-A) in the longitudinal plane, N being an integer greater than or equal to two and less than or equal to sixteen.

11. The instrument (10) according to claim 9 or 10, wherein each elementary facet (FS1-FS4) of the optical component (3) is associated with a respective spectral filter, so that a spectral transmission window which is associated with one of said elementary facets is different from the spectral transmission window which is associated with each other elementary facet.

12. The instrument (10) according to any one of the preceding claims, wherein the imaging optical system (1) is a telescope.

13. An imaging method, using an imaging instrument (10) in accordance with any one of the preceding claims.

14. The imaging method according to claim 13, of multispectral imaging method type, wherein the imaging instrument (10) is in accordance with claim 11, and wherein said imaging instrument is used on board a satellite orbiting around the Earth.

FIG. 1

FIG. 2a

FIG. 2b

FIG. 2c

FIG. 2d

FIG. 3a

FIG. 3b

FIG. 3c

FIG. 4

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 0593327 A
- EP 0785447 A

- WO 2011138541 A